# EUROPEAN PATENT APPLICATION

(11) **EP 1 582 576 A1**
(43) Date of publication of application: **05.10.2005**
(21) Application number: 04101389.7
(22) Date of filing: 02.04.2004
(51) Int. Cl.: C09K 3/32

(54) **Process for the prevention or restriction of oil spiLls**

(71) Applicant: KRATON Polymers Research B.V., 1031 CM Amsterdam (NL)
(72) Inventor: VONK, Willem C., 1031 CM AMSTERDAM (NL); MIGCHELS, Peter KRATON Polymers Research S.A., 1348 Ottignies Louvain-La-Neuve (BE); Roumache Olivier, 1348 Ottignies - Louvain-La-Neuve (BE)
(74) Representative: Kortekaas, Marcel C.J.A.

(57) **Abstract**

The present invention relates to a process for the prevention or restriction of oil spills of mineral oil and more in particular crude oil, by introduction of ready for use particles of block copolymer, comprising at least one predominantly poly(vinyl aromatic compound) block and at least one predominantly poly(conjugated diene) block into or around the relevant oil containing compartments in a ship to one embodiment of the process, particles of the block copolymers, stored permanently as packages on several convenient places on a ship, can easily be introduced into a damaged compartment of a ship such as cargo tanks or the bunker fuel tank, in order to immobilize the oil contents by forming a gel in order to prevent leakage. According to another embodiment of the process said particles of block copolymer have been permanently incorporated into the double hull space in order to prevent leakage of oil from a damaged cargo tank and/or fuel tank.

## Description

### Technical Field

The present invention relates to a process for the prevention or restriction of oil spills.

More in particular the invention relates to a process for the prevention or restriction of oil spills on the water surface of seas , rivers or canals after accidents with oil tankers.

### Background Art

Large marine calamities after accidents with large crude oil tankers, such as the oil tankers Prestige in November 2003 near Gibraltar and Exxon Valdez in Alaska in 1989 have made clear that the integral environmental damages, caused by large oil spills, can be immense and after initial cleaning of the contaminated areas, wildlife along the coast, and more in particular marine life, needs decades for restoration, if any.

Although several measures have been taken by governmental organizations of several major countries to reduce the risks of oil spills after accidents with ships in vulnerable sea water areas, such as the phasing out single hulled tankers by 201 D in US waters, said accidents with oil tankers can never be excluded due to the expected increase of cargo ship traffic.

Moreover, there are still found intentional dumpings of waste oil by ships, the sizes of which can also cause large damages to coast and marine life.

It is known that the oil spills are normally eliminated only very slowly by natural processes. As oil spreads over the sea surface, natural processes start to break it down. More in particular the following physical and chemical changes will normally help the contaminated sea or ocean clean itself of oil:
- evaporation of light substances of the water surface,
- emulsification by wave action, mixing the oil and water into a mousse-like substance which can be scooped up,
- dissolution of a low proportion of oil compounds into the seawater,
- heavy oil fractions are pulled down by the seafloor by sinking gravity,
- oxygen molecules combine with oil, allowing it to slowly dissolve in water,
- microbes in (sea)water feed on compounds in oil, breaking it down into water soluble compounds (biodegradation),
- after microbes have begun degrading oil, small worms join in. These worms are eaten by fish and the oil enters the marine food chain.

It will be appreciated that in order to prevent huge environmental and economical damages in the event of accidents in which oil tankers are involved, extensive research efforts have been made in the last decades and will be continued. In this respect several proposals have been made such as the dissemination of chemical emulsifying systems on the oil-contaminated sea water surfaces in order to disperse the oil for facilitating the oxidation and biodegradation of the oil or to coagulate the oil film on the water into relatively large droplets, which easily sink to the bottom.

An object of the present invention is to provide improved means for reduction of prevention of oil spills which moreover are immediately present ready for use on the spot at an economically attractive price.

It has now been found that particles, comprising a block copolymer having at least one predominantly poly(vinyl aromatic compound) block and at least one predominantly poly(conjugated diene) block, can quickly adsorb mineral oils and in particular a variety of crude oils, up to a large extent of their original weight, under formation of stable gels, even if the initial viscosity of such mineral oils is low, when added into or being present in or around oil containing compartments of a ship.

### Disclosure of Invention"

Accordingly, the present invention relates to a process for the prevention or restriction of oil spills of mineral oil and more in particular crude oil, by introduction of ready for use particles of block copolymer, comprising at least one predominantly poly(vinyl aromatic compound) block and at least one predominantly poly(conjugated diene) block into or around the relevant oil containing compartments in a ship.

It will be appreciated that the subsequent fast gelation of the oil/polymer combination will prevent leakage or further leakage of oil from the ship as any large oil volumes in said ship will be immobilized.

According to one embodiment of the process, particles of the block copolymers, stored permanently as packages on several convenient places on a ship, can easily be introduced into a damaged compartment of a ship such as cargo tanks or the bunker fuel tank, in order to immobilize the oil contents by forming a gel in order to prevent leakage.

More in particular, said permanently stored packages of block copolymer particles can be quickly introduced into the bunker oil tank and/or oil cargo tanks by means of a propelling gas, which is released in case of an emergency and which entrains the block copolymer particles into the tank(s).

According to another embodiment of the process said particles of block copolymer have been permanently incorporated into the double hull space in order to prevent leakage of oil from a damaged cargo tank and/or fuel tank.

### Mode(s) for Carrying Out the Invention

The block copolymer to be used in the process of the present invention may be any block copolymer, comprising at least one predominantly poly(vinyl aromatic compound) block, having a weight average molecular weight of at least 10,000 and preferably from 10,000 to 45,000, and at least one predominantly poly(conjugated diene) block, having a weight average molecular weight of at least 30,000 and preferably from 50,000 to 300,000.

Preferred block copolymers are those having the formulae: A-B, A-B-A or (A-B)ₙ X or mixtures thereof, wherein A represents a predominantly poly(vinyl aromatic compound) block, wherein B represents a predominantly poly(conjugated diene) block and wherein X represents the remainder of a coupling agent and wherein n is an integer in the range of from 2 to 14 and preferably from 2 to 8.
With the term "predominantly poly(vinyl aromatic compound) block" or " predominantly poly(conjugated diene) block", as used throughout the present specification and claims is meant that these blocks may have been prepared from major amounts of a main monomer, which optionally may be mixed with minor amounts of other comonomers (at most 10 wt%, relative to the total weight of monomers).

The poly(vinyl aromatic compound) blocks can be derived from styrene, o-methyl styrene, p-methyl styrene, p-tert-butyl styrene, 2,4-dimethyl styrene, alpha-methyl styrene, vinyl naphthalene, vinyl toluene, vinyl xylene, or mixtures thereof.

A preferred vinyl aromatic monomer is styrene as substantially pure monomer (content more than 99 wt% of the monomer mass) or as main monomer, mixed with minor proportions (at most 10 wt%) of one or more of other structurally related vinyl aromatic monomer(s) or with minor proportions of another comonomer (e.g. conjugated diene). The use of substantially pure styrene is most preferred.

The conjugated diene monomer can be selected from butadiene, isoprene, 2,3-dimethyl 1,3-butadiene, 1,3-pentadiene, 1,3-hexadiene and mixtures thereof. Preferred conjugated diene monomers are butadiene or isoprene or mixtures thereof. Said mixtures of butadiene and isoprene can be copolymerized into a polymer block (B), comprising individual homopolymer blocks of poly(butadiene) and poly(isoprene) or a sole substantially random copolymerized block, having average homopolymer lengths of less than 100 monomer units and preferably of less than 20 monomer units.

A more preferred conjugated diene comonomer is butadiene or isoprene, which can be used as substantially pure comonomer alone (content more than 99 wt% of the monomer mass) or as main monomer, mixed with minor proportions (at most 51 wt%, relative to the weight of the total monomer mass) of one or more of the hereinbefore structurally related conjugated dienes or with minor proportions of a vinyl aromatic comonomer, such as styrene.

Most preferred block copolymers contain conjugated diene blocks, derived from substantially pure butadiene or isoprene.

The block copolymers may be either linear or radial and will preferably have an apparent total molecular weight in the range of from 100,000 to 650,000.

It will be appreciated that the main linear triblock copolymers or radial, multi-armed block copolymers may also comprise significant proportions of accompanying diblock copolymers, comprising the same poly(vinyl aromatic) block and poly(conjugated diene) block as in the respective (AB)-arms. Said diblocks result from the manufacture of the main triblock copolymer or radial block copolymer by coupling initially prepared living diblock copolymers with a coupling agent, as known from e.g. US 3231635 **US 3251905 ; US 3390207 ; US 3598887 ; US 4219627** and EP patent applications **EP 0413294 A; EP 0387671 A; EP 0636654 A**and **WO 22931** , the disclosure of which have been incorporated herein by reference.

The diblock content can be in the range of from 0 to 80 wt% and preferably from 10 to 50 wt%.

The 1,2-addition during the polymerization of conjugated diene and more preferably butadiene or isoprene (vinyl content) is preferably in the range of from 5 to 70 wt% and more preferably from 8 to 25 wt%.

Block copolymers to be used for the process of the present invention may show a bound vinyl aromatic monomer content in the range of from 10 to 50 wt% and more preferably from 20 to 40 wt%.

Examples of suitable block copolymers to be used according to the present invention are KRATON® D-1118, KRATON D-1101, KRATON D-1102, KRATON D-1184, KRATON D-1186, KRATON D-1192, KRATON KX-220, KRATON KX-219 block copolymers or mixtures thereof.

It will be appreciated that the block copolymer to be applied for the process of the present invention may also have been selectively hydrogenated, which means that the poly(conjugated diene) block(s) may have been fully or partially hydrogenated (residual ethylenical unsaturation less than 25 %, preferably less than 5 % of the original and more preferably less than 2 % of the original ethylenical unsaturation, whereas the poly(vinyl aromatic) block(s) have not been substantially hydrogenated.

Such block copolymers are known from e.g. **US 3113986 ; US 4226952** ; **US 5039755 and US re27145e** , the disclosures of which are herein incorporated by references.

Examples of said block copolymers are KRATON G-1652, G-1651, G-1654, G-1633 or G-6917.

The application of said selectively hydrogenated block copolymers is preferred and more in particular the application of KRATON G-1651 and G-1654.

It will be appreciated that the block copolymers to be used in the process of the present invention must have an active surface as large as possible and must occur therefore in the form of fine particles, obtainable by milling, and/or of a fluffy structure, obtainable by flashing off the solvent from the initially block copolymer containing cement.

Said block copolymers will normally be characterized by:
1. a bulk density of from 0.1 to 0.7 and preferably from 0.2 to 0.5;
2. a particle size distribution such that the content of constituents remaining on a 5-mesh sieve is not greater than 30 % by weight and the content of constituents passing through a 20-mesh sieve is not greater than 30 % by weight or less (according to ASTM E-11).

According to a preferred embodiment of the present invention the applied block copolymers have a total pore volume of from 100 to 200 mm³/g and preferably from 120 to 2000 mm³/g and more preferably from 150 to 2000 mm³/g.

Such block copolymers can be prepared according to e.g. **US 6150439** and more in particular column 7, lines 60-67, column 8, lines 10-15, column 9, lines 16-31.

It will be appreciated that in the applied block copolymer(s) one or more additives can be included, such as oleo chemical synthetic waxes and specifically those available under the designations SPRAY BUSTER™ and KEMESTER™ from WITCO CHEMICAL CORP. Said synthetic waxes are long chain polymers, principally of ethylene block copolymers, which are available in solid particulate or powder form. Said synthetic waxes can be included in small amounts of up to 5 wt% and preferably up to 2 wt%, relative to the weight of the block copolymer(s).

The invention also relates to ships in which the space around the hull of a bunker oil tank or tanks is filled up with the hereinbefore specified block copolymer particles and/or in which the double hull space around oil cargo compartments is filled with the hereinbefore specified block copolymer particles.

The invention also relates to ships wherein or whereon equipment has been installed, comprising at least one container, containing the block copolymer particles, for blowing said block copolymer particles in case of emergency into the bunker oil tank(s) and/or into the oil cargo tanks.

Preferably said equipment will comprise a container with propelling gas and connected there with a container with the block copolymer particles, and a connecting pipe between both containers, wherein a valve has been installed which can be automatically opened by a hard shock and/or by high temperatures, due to a local fire, where after the propelling gas together with entrained block copolymer particles is led into the bunker oil tank(s) or oil cargo tanks.

It will be appreciated that the present invention also relates to a ship, which has been significantly damaged and from which oil leakage has been prevented by an immobilized gel, formed by absorption of oil by the hereinbefore specified block copolymers.

The present invention will hereinafter be described in more specifically by reference to the following example, however without restricting the scope to this specific embodiment:

### Example 1

This example demonstrates the combination of both super absorbent performance and resulting stopper effect of a small amount of block copolymers, such as K RATON G polymers, according to the invention.

A limited amount of KRATON G polymer powder was placed in a test tube. A large excess of oil featuring a spill was then poured in the test tube. Extra quantity of oil can be added to the test tube to keep a constant pool of oil as required. The diffusion of the oil through the polymer was monitored over time.

**Table 1**

| Time | Oil penetration |
|---|---|
| instant | 3cm |
| 2 hours | 6cm |
| 48 Hours | 10cm |

This example shows the effect of KRATON G polymers on a hydrocarbon spill. It demonstrates the efficiency of this ingredient to absorb the oil and swell so that is act as a stopper for preventing oil leakage. Inside a boat, the same effect will take place and the polymers will start to absorb the oil from the leakage and very quickly act as a barrier limiting or even stopping the leakage as it swell so much that oil cannot find its way between the polymer particles.

It means that a polymer bag may act in the double deck as a stopper. The efficiency is so good that a 6-10cm thickness bag containing block copolymer is sufficient to stop "any" leakage.

## Claims

1. A process for the prevention or restriction of oil spills of mineral oil, by introduction of ready for use particles of block copolymer, comprising at least one predominantly poly(vinyl aromatic compound) block and at least one predominantly poly(conjugated diene) block, into or around the relevant oil containing compartments in a ship.

2. A process according to claim 1, **characterized in that** said particles of block copolymer have been permanently incorporated into the double hull space of an oil tanker ship.

3. A process according to claim 1, **characterized in that** permanently stored packages of block copolymer particles can be quickly introduced into the bunker oil tank and/or oil cargo tanks by means of a propelling gas, which is released in case of emergency and which entrains the block copolymer particles into the tank(s).

4. A process according to claim 1, **characterized in that** block copolymers are applied having a weight average molecular weight in the range of from 100,000 to 650,000 and wherein the predominantly poly(vinyl aromatic compound) block(s) has a weight average molecular weight of from 10,000 to 45,000.

5. A process according to claim 1, **characterized in that** the predominantly poly(conjugated diene) blocks have a weight average molecular weight of from 50,000 to 300,000 and comprise substantially pure butadiene or isoprene.

6. A process according to claims 1-5, **characterized in that** the applied block copolymers have been selectively hydrogenated up to a residual ethylenical unsaturation of less than 5%.
